# EUROPEAN PATENT APPLICATION

(11) **EP 1 810 859 A1**
(43) Date of publication of application: **25.07.2007**
(21) Application number: 06381006.3
(22) Date of filing: 23.01.2006
(51) Int. Cl.: B60J 7/16

(54) **Tilting sunroof for vehicles**

(71) Applicant: GRUPO ANTOLIN-INGENIERIA, S.A., 09007 Burgos (ES)
(72) Inventor: Alonso Ausin, Gisleno, 09195, Villariezo (ES); Soto Romero, Dario, 09006 BURGOS (ES)
(74) Representative: Esteban Perez-Serrano, Maria Isabel

(57) **Abstract**

The present invention consists of a tilting vehicle sunroof that can be opened by a simple and robust drive scheme that allows establishing large glass areas with small height requirements that do not affect the internal available space in a relevant manner. This invention is characterised by the use of a cable (6) under tension counteracting the constant action of a passive actuator, such as a pneumatic cylinder (4).

## Description

### OBJECT OF THE INVENTION

The present invention consists of a tilting vehicle sunroof that can be opened by a simple and robust drive scheme that allows establishing large glass areas with small height requirements that do not affect the internal available space in a relevant manner.

Moreover, this two-fold aim is attained with a low-cost design due to its simplicity, such that in addition to this cost reduction the likelihood of malfunction is reduced and the lifetime is increased as measured in the number of opening and closing cycles.

This invention characterises the use of a cable under tension counteracting the constant action of a passive actuator. A passive actuator is understood to be any element that can apply a constant force with an essentially conservative nature, such as a pneumatic cylinder or a spring.

### BACKGROUND OF THE INVENTION

There are numerous solutions for opening sunroofs that employ drive schemes based either on sliding in rails or more or less complex motions governed by cams.

The simplest case consists of a transparent element sliding in lateral rails that is carried manually using a handle. This scheme also requires a locking and closing means to maintain the closed position and to prevent improper access to the vehicle interior.

This sliding movement can take the transparent element to a position placed above the roof or one placed above another, fixed, sunroof.

In this type of drive systems, motorised displacement involves using lateral drive push-pull cables which, together with the rails, are configured in diverse ways in each specific case.

There are other more complex motions that require rotation about shafts or about instantaneous rotation axes which also move. The latter correspond to motions determined by cams or more complex drive chains.

The first document cited in the prior art is the solution for opening the sunroof described in Japanese patent with publication number JP2001328433.

This patent describes a means for opening and closing consisting of the combination of a grooved plate that can revolve about a shaft placed on one of its ends and a set of pulleys with anchoring and guide parts.

The set of pulleys defines a loop, such that the forward cable moves parallel to the return cable at least in the segment corresponding to the cables. Thus, any part joined to either cable will move in either one direction or the other, always in a synchronised way.

Above this cable placed between pulleys is set a part with a stem that enters a cam of the plate. The movement of the part with the stem causes a vertical displacement of the plate at this point, resulting in a rotation that will open or close the assembly depending on the direction of motion.

At the same time, the cable corresponding to the other side of the pulley has another part that receives and anchors the end of the plate. The synchronisation of the two parts allows ensuring that the anchoring only takes place when the plate has been lowered.

The plate described is one of the lateral support structures of the transparent laminar element conforming the sunroof. The rotation that raises one of its ends is what opens the window, while the opposite rotation together with the anchoring will close and lock it.

The cable must move forward and return on both sides. The patent also describes the loops required to use a single cable.

Patent with publication number JP7081427 is more complex. In this case, the transparent element has a movement that does not correspond to a simple rotation, but instead uses a combined rotation and translation motion by means of a double cam mechanism.

Considering that the main object of the present invention is to reduce costs, antecedents known in the prior art present several drawbacks among which the following are remarked:
- Push-pull cable actuation implies a greater cost of components that cable actuation, particularly due to the cost of the push-pull cable itself and the need for a push-pull cable housing. This housing, not required with the cable, also increases the cost and, as the push-pull cable is thicker than the cable, its housing is generally placed on the rails. This configuration reduces the space available inside the vehicle.
- Known cable actuations use cams to move the window. Cam systems require a mechanical design and calculating their robustness, which implies that they are technical parts with a more costly manufacture and more complex assembly than non-technical parts.

### DESCRIPTION OF THE INVENTION

The present invention consists of a sunroof for vehicles based on a simple design, with small height requirements to prevent reducing the interior space of the vehicle and a mode of operation that ensures a long life of the device.

The sunroof according to this invention uses two structures: a fixed structure in the form of an essentially rectangular frame and a mobile structure joined to the transparent element. The two are connected at their anterior part, so that the mobile structure revolves about a transverse axis defined by at least two pivots.

The mobile structure is preferably configured with a U shape, such that its ends are related by rotation to the mobile structure. However, the structure can have several different configurations, among which may be a closed, essentially rectangular frame or a lighter structure constituted only by two lateral profiles.

From a cinematic point of view, the sunroof is opened and closed by rotating the mobile structure about the axis defined by its ends.

From a dynamic point of view, the mobile structure is constantly subjected to an elevation force.

This constant force is achieved by what is known as a passive actuator. The term "passive" is used because it involves elements that have an essentially conservative nature, except for minimal internal friction, such as pneumatic cylinders or sprints, as opposed to motors or servomechanisms having an active drive means.

For example, if a pneumatic cylinder is used, it is placed between the two so that in any position of the mobile frame there is a vertical force component tending to raise the sunroof.

As there is no opposing force, the sunroof will always be raised to its top position, defined by a stop, with sufficient force to be overcome by wind resistance ensuring that it will not be closed and is stable.

The window is closed by active force-exertion means that tend to close the window. These active means are preferably driven by a retraction motor that pulls on both ends of the cables that run on either side. The retraction motor can be replaced by a manual lever.

The cable is provided with either pulleys or deflectors that define the path along the frame of the fixed structure until preferably reaching positions near the vertices of the mobile structure opposite to those associated to the rotation, or at least positions separated from the rotation axis.

From these points, which are naturally neat those where the passive actuators are placed, a vertical traction force is exerted that tends to close the sunroof. This force must overcome that exerted by the passive means in order to lower the sunroof.

As the passive means constantly tend to raise the sunroof, the active means must define its position. Reducing the cable tension to a minimum will open the sunroof, while applying the traction force will close it.

Once the sunroof is closed it is necessary to apply a certain pressure applied on the frame of the fixed structure so that the sealing gasket provides a waterproof seal.

In addition, anchoring means may be included to lock the closure preventing an undue opening, as well as securing the closed position when the vehicle is travelling at high speeds.

### DESCRIPTION OF THE DRAWINGS

The present descriptive memory is completed by a set of drawings that illustrate an example of a preferred embodiment and in no way limit the invention.

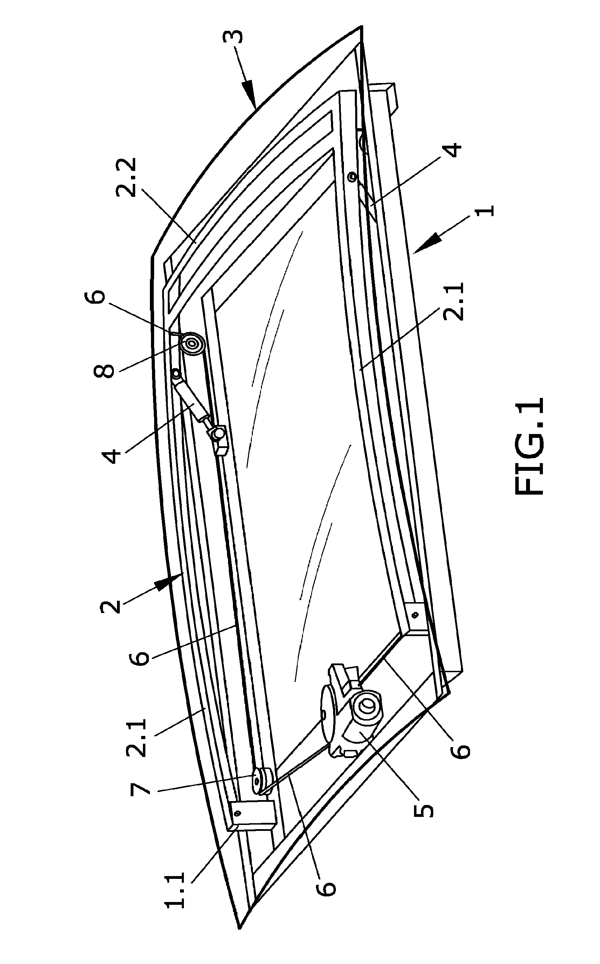

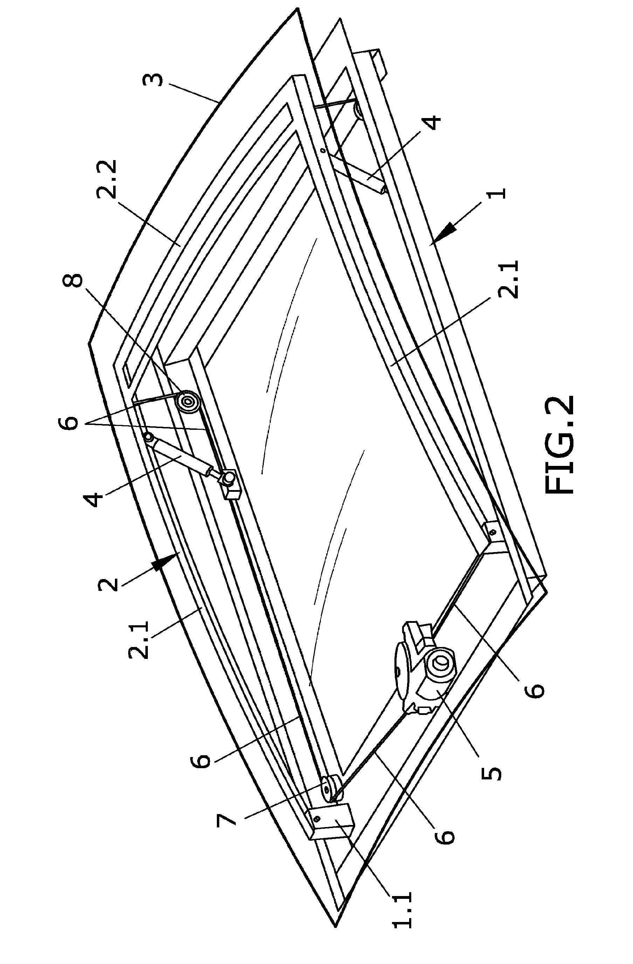

Figures 1 and 2 represent a perspective view of the device of the invention according to an example of embodiment, respectively in a closed and open position. This example of embodiment uses pneumatic cylinders as passive elevation actuators.
Figure 3 represents a perspective schematic representation of the actuation means allowing to move the mobile structure with respect to the fixed one, according to the previous example of embodiment.
Figures 4 and 5 are examples of how to change the direction of the cable, the former employing pulleys and the second employing deflectors.
Figure 6 shows a detail of a device used in the same example of embodiment to maintain the cable tension.

### DETAILED DESCRIPTION OF THE INVENTION

The invention consists of a sunroof for windows mainly comprised of two structures, a fixed structure known as the frame (1) which constitutes the supporting structure framing the opening in the vehicle roof and a mobile structure (2) which in this example of embodiment consists of a set of profiles, two lateral profiles (2.1) and one rear profile (2.2) which configure a U shape. In this U the ends pivot about supports (1.1) that define the transverse rotation axis of the mobile structure (2).

Attached on top of the mobile structure (2), such as by gluing, is the glass pane (3) that defines the sunroof window. Although in this case gluing glass panes is considered, in fact the transparent element mounted on the mobile structure may also be a plastic sheet.

The aforementioned elements constitute the essence of the sunroof, which comprises a drive mechanism based on the presence of a transverse rotation axis placed on the anterior side, on which the mobile structure (2) is hinged to the fixed structure (1). The window turns about this transverse axis, leaving an opening in the rear part and partially on the sides.

As regards the process of opening and closing the window, the present example of embodiment makes use of pneumatic cylinders (4) placed between the fixed structure (1) and the mobile structure (2) such that it tends to separate them at all times. The cylinders (4) does not necessarily have to be perpendicular to any of the planes that define the fixed structure (1) or the mobile structure (2), it is enough that there is a perpendicular component at all times that results in a separation force between the two structures (1, 2). In the same way that this example of embodiment uses a pneumatic cylinder (4), another type of devices can be used to drive this separation, such as a helical spring or strip. It is even possible for this passive actuator to be in a different place. This is the case of torsion bars, which must be placed on the axis of rotation.

The essential factor is that it uses passive means by way of actuators, which act on the mobile frame (2) at all times tending to open it.

These passive actuator means allow closing the sunroof by applying a top force that is greater than its own. This allows closing it or placing the sunroof at any intermediate position.

In the example of embodiment of the invention, the force opposing that of the pneumatic cylinders (4) is obtained from active actuation means consisting of a motor (5) that can generation a traction force on two segments of cable (6), one segment running on one side and the other segment running on the other side until reaching the rear part by deflection means.

As regards the deflection means, the two cable segments (6) reach first deflectors (7) placed near the anterior vertex of the frame (1) or fixed structure and second deflectors (8) placed separated from the axis of rotation.

The first deflectors (7) allow the cable segments (6) arriving from the motor (5) to run along the sides of the frame (1), while the second deflectors (8) are placed near the pneumatic cylinders (4), allowing the cable (6) that arrives from the sides to exert a vertical downwards traction. This vertical traction is produced because the cable (6) has a vertical force component, where vertical is defined as perpendicular to the main plane defined by the frame (1).

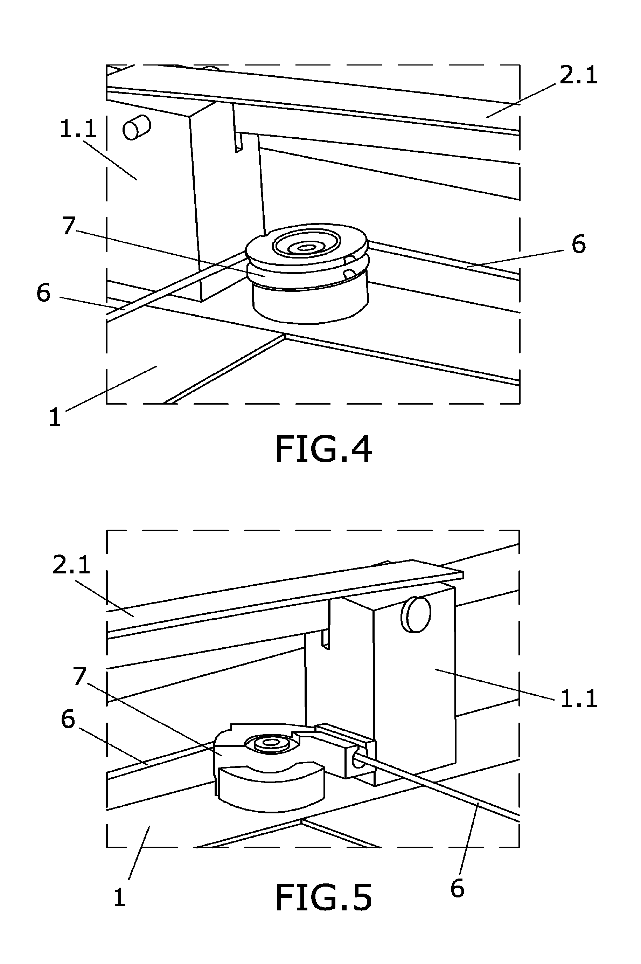

Figure 4 represents a pulley (7) as the means for changing the direction of the cable (6). Figure 5 shows a deflector (7) in which the cable (6) slides internally, guided by a groove with the curvature required to prevent excessively small radii that may damage the cable (6).

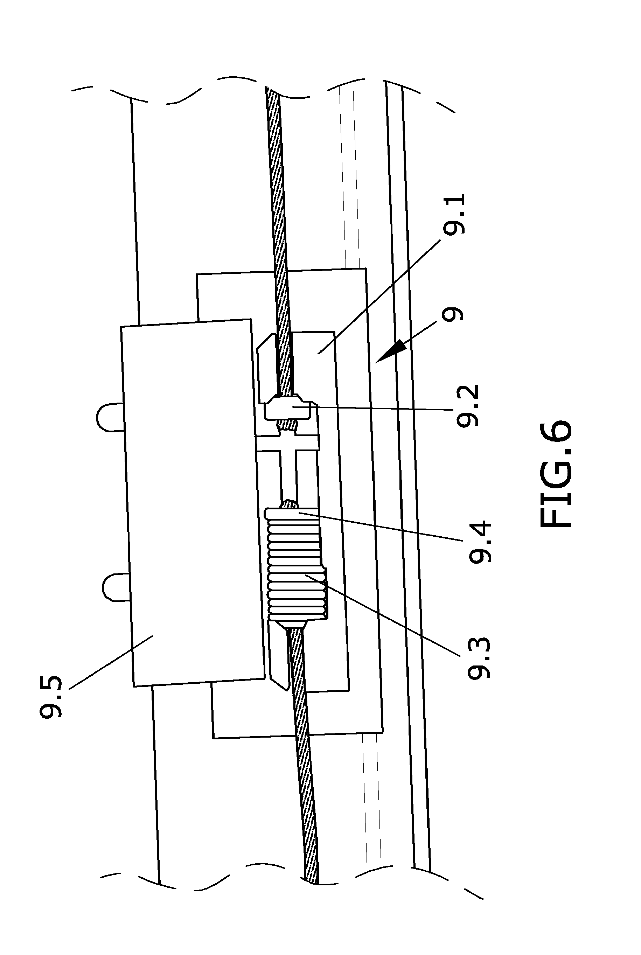

This example of embodiment of the invention makes use of a tensioning means (9) as shown in figure 6. Over time, the cable (6) loses its initial tension due to elongation. This reduced tension is prevented in this example by a device as that shown in figure 6, consisting of a casing (9.1) meant to join two ends of the cable (6) that must be tensioned. One end of the cable (6) is attached to the casing (9.1) by an attachment piece (9.2). The other end of the cable (6) is attached to a base (9.4) that rests on a helical spring (9.3) under compression. The possible elongations of the cable (6) will be compensated by the decompression of the spring (9.3), which ensures the tension of the cable (6). In turn, the displacement of the cable (6) results in the displacement of the entire casing (9.1), which is guided in a housing (9.5) that rests at its rear on the frame (1).

The possible elongation of the cable is one of the reasons why there may be an unbalance between the two segments of the cable (6), so that one end of the sunroof window will descend more than the other.

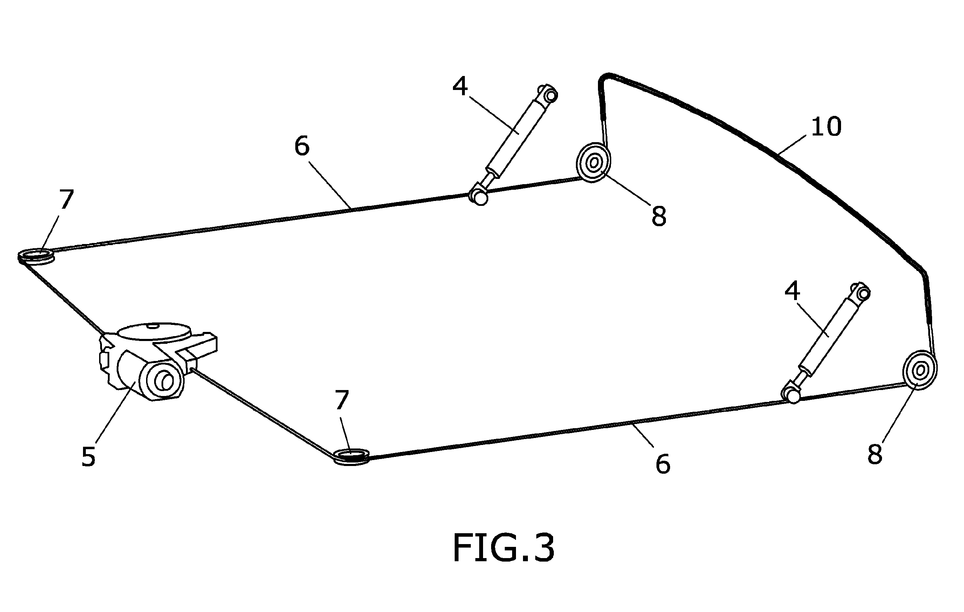

In order to prevent these unbalances, figure 3 shows a schematic drawing of the components meant to provide the various drive forces for opening and closing the sunroof, in which the segments of the cable (6) on either side of the window converge at the rear part.

Housed at this rear part of the cable (6) is a guiding and sliding sheath (10). Any unbalance of the lateral segments of the cable (6) will be compensated, as the fact that they are connected means that the tension on them will be the same on both sides.

Although figure 3 uses a single guide sheath (10), it is also possible to incorporate a further two deflectors, in this case joined to the mobile structure (2), which can for example consist of two segments of sheath (10) present only on the curved segments, pulleys or deflectors or in any other places in which there is a change of direction.

## Claims

1. Sunroof for vehicles comprising a fixed structure (1) or frame joined to the roof of the vehicle and a mobile structure (2), hinged to each other by a rotation about a transverse axis located on the anterior part, **characterised in that** it has passive actuation means that apply a constantly present force that tends to raise the mobile structure (2), and in which the total or partial closure is effected by active actuation means that oppose the force applied by the passive actuation means.

2. Sunroof for vehicles according to claim 1, **characterised in that** the passive actuation means are pneumatic cylinders (4).

3. Sunroof for vehicles according to claim 1, **characterised in that** the passive actuation means are springs or flexible strips.

4. Sunroof for vehicles according to claim 1, **characterised in that** the passive actuation means are torsion bars.

5. Sunroof for vehicles according to claim 1, **characterised in that** the active actuation means consist of a motor (5), or alternatively a manually actuated lever, responsible for acting on two segments of the cable (6), one on each side, which through deflection means reach the rear part opposite the side with the transverse rotation axis to exert a downward force opposing that of the passive means.

6. Sunroof for vehicles according to claim 5, **characterised in that** first deflection means (7) are near the anterior vertices of the frame (1) to change the direction of the cable (6) from the motor to the sides and second deflection means (8) are on the rear part to change the direction of the cable (6) from the sides to a direction with a vertical component.

7. Sunroof for vehicles according to claim 5, **characterised in that** the deflection means are pulleys.

8. Sunroof for vehicles according to claim 5, **characterised in that** the deflection means are deflectors.

9. Sunroof for vehicles according to claim 5, **characterised in that** the cable (6) has a device for maintaining the tension (9) in order to compensate a possible elongation of the cable (6).

10. Sunroof for vehicles according to claim 5, **characterised in that** the segments of the cables (6) on either side converge on the rear part to compensate the tension in them.

11. Sunroof for vehicles according to claim 10, **characterised in that** the rear part of the cable (6) is sheathed for internal guidance and sliding, either fully or partially on the curved end segments by way of deflectors.

12. Sunroof for vehicles according to claim 10, **characterised in that** the cable (6) is guided at the curves that allow its convergence on the rear part by pulleys or deflectors.

13. Sunroof for vehicles according to claim 1, **characterised in that** the mobile structure consists of two lateral profiles (2.1) and one rear profile (2.2) configuring a U, the ends of which pivot about supports (1.1).

14. Sunroof for vehicles according to claim 1, **characterised in that** mounted above the mobile structure (2) is the transparent element.
